# EUROPEAN PATENT SPECIFICATION

(11) **EP 1 593 946 B1**
(45) Date of publication and mention of the grant of the patent: **22.06.2011**
(21) Application number: 05009821.9
(22) Date of filing: 04.05.2005
(51) Int. Cl.: G01K 1/16, G01K 13/00

(54) **Skin patch including a temperature sensor**
Hautpflaster mit Temperaturfühler
Emplâtre cutané comprenant un capteur de température

(30) Priority: 04.05.2004 NZ 53272904
(43) Date of publication of application: 09.11.2005
(73) Proprietor: Fisher & Paykel Healthcare Limited, Auckland (NZ)
(72) Inventor: Church, Jonathan Mark, Bucklands Beach, Auckland (NZ); Heald, Warrick, Dannevirke (NZ); Prime, Neil, Auckland (NZ)
(74) Representative: Hoarton, Lloyd Douglas Charles

(56) References cited:
- WO-A-02/46711
- US-A- 5 255 979

## Description

### FIELD OF THE INVENTION

The present invention relates to a skin temperature sensor particularly though not solely for use with infant radiant warmers or convective incubator.

### BACKGROUND

In the United States Patent No 5841944, a radiant warmer is described for heating an infant. As an integral part of the warmer a temperature sensor is required to measure the infants skin temperature at all times, to allow the radiant heater closed loop control. The sensor must maintain contact with the infant's skin and reflect away radiant energy from the heater above.

Traditionally there has been a separate temperature sensor and a separate cover where the sensor is attached to the patient with the cover placed on top of it. There are also difficulties with the cover providing adequate pressure on the sensor and removing the cover from the infants' skin without damage.

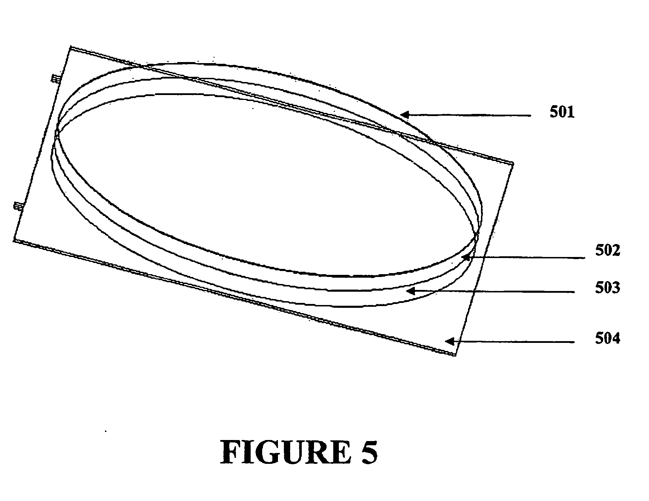

An example of the prior art is a stainless steel disc containing two temperature sensing thermistors. They can be used in conjunction with a separate disposable probe cover to adhere the probe to the skin surface and insulate the probe from the radiant heat from the warmer to ensure an accurate skin temperature measurement. In Figure 5 the foil 501 reflects infa-red heat from a radiant warmer, the insulating foam 502 acts as an insulation layer for the temperature sensor. The sensor rests on the skin and the Hydrogel 503 (which is skin adhesive with the backing plastic 504 removed just prior to application) adheres over the sensor onto the surrounding skin.

US 5 255 979 discloses another such system in which the sensor rests on the skin and the hydrogel surrounds the sensor.

### SUMMARY OF THE INVENTION

It is therefore an object of the present invention to overcome any disadvantages in the prior art or which will at least provide the public with a useful choice.

Accordingly in a first aspect the present invention consists in a sensor enclosure as defined by claim 1.

Preferably said receptacle is enclosed by said panel, enclosed by said polymer matrix or enclosed by a combination of said panel and said polymer matrix.

Preferably further comprising a temperature sensor within said receptacle.

Preferably said patient is an infant.

Preferably said polymer matrix in use adhered to said panel.

Preferably said sensor including an electrical connection and said polymer matrix in use adhered to said connection.

Preferably said polymer matrix in use adhered to said sensor.

Preferably said panel further comprising a radiant shield, and thermal insulation between said shield and said sensor.

Preferably said polymer matrix is a polymerizerable polymer Hydrogel.

Preferably said sensor is fully encapsulated by said polymer matrix.

Preferably said polymer matrix includes a detachable lid to encapsulate said sensor.

Preferably said lid includes a loop fastening portion.

Preferably said lid is comprised of a further portion of said polymer matrix which adheres to the main portion thereby encapsulating said sensor.

Preferably said sensor is a flat disc type sensor.

Preferably said shield is mylar foil.

Preferably said mylar foil is 0.025mm thick.

Preferably said insulation is foam.

Preferably said foam is similar or the same in thickness to said sensor or said receptacle.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

The invention consists in the foregoing and also envisages constrictions of which the following gives examples.

### BRIEF DESCRIPTION OF THE DRAWINGS

Examples of the present invention will now be described with reference to the accompanying drawings in which;
Figure 1 is a blown out perspective of the first embodiment of the present invention.
Figure 2 is a blown out perspective of the second embodiment of the present invention.
Figure 3 is a blown out perspective of the third embodiment of the present invention,
Figure 4 is a perspective of the present invention in use, and
Figure 5 is a prior art temperature sensor adhesive cover.

### DETAILED DESCRIPTION

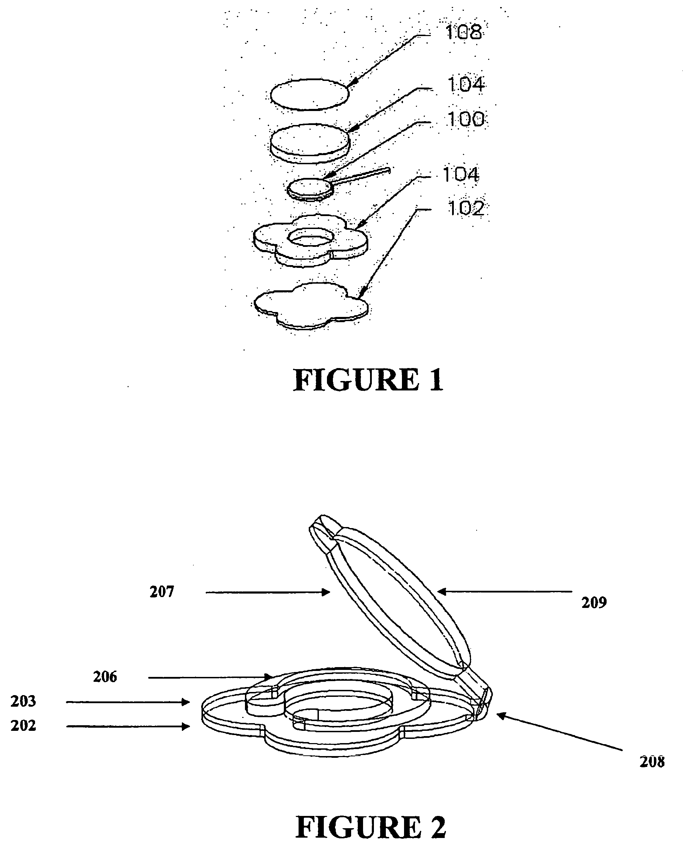

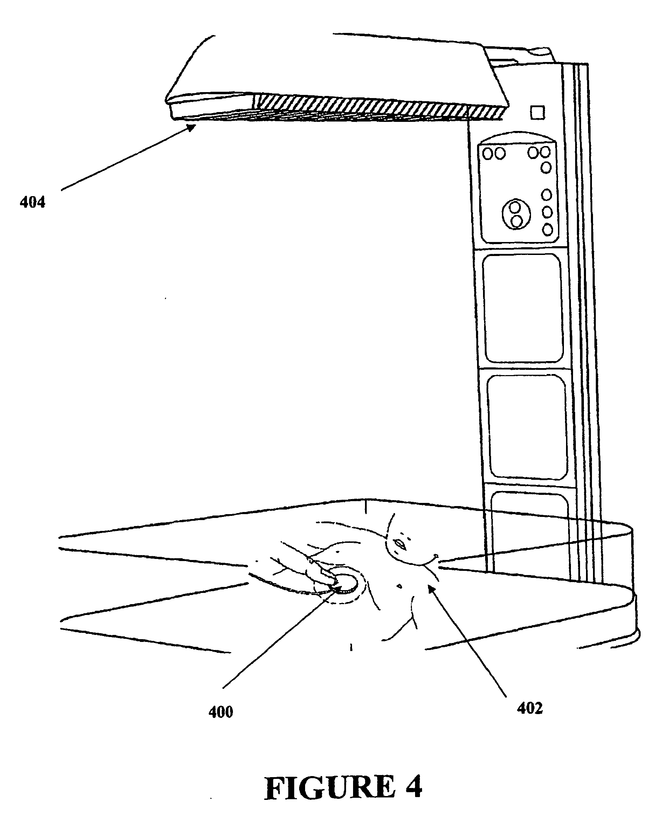

In a first embodiment the present invention comprises an all in one temperature sensor and cover. The sensor 100 would be sandwiched between a bottom layer of Hydrogel 102 that adheres to the patient's skin, and a top thermal shield layer of foam 104 and reflective metallised polyester 108 seen in Figure 1. The sensor pad 400 would be attached to the infant 402 on an infant warmer 404 as seen in Figure 4. This can be used in radiant warmers such as disclosed in US Patent no 5841944, and/or infant incubators, although other applications will be apparent to one skilled in the art.

Measuring the patient's temperature through the Hydrogel, a more accurate result is gained than with prior art infant sensing. The sensor is totally enclosed eliminating temperature fluctuations due to air gaps and the sensor is more secure and less likely to pull away from the patient. The Hydrogel used is such that the adhesiveness of it will hold the sensor in place but won't remove infant's skin when being removed.

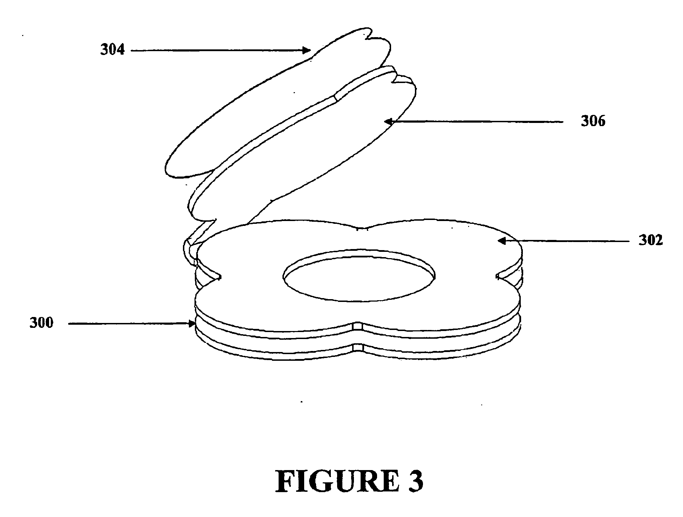

The thermal conductivity of the Hydrogel is such that any change in skin temperature is transferred to the sensor as quickly and with less noise than without the Hydrogel. The present invention may also comprise a sensor enclosure for a conventional temperature sensor. There are two approaches here.
1) In a second embodiment referring to Figure 2 the temperature sensor 100 is preferably placed on top of the Hydrogel 202 and foam 203 and then enclosed by a Velcro fastening arrangement 206, 207. The sensor is preferably held in place by the tackiness of the Hydrogel 202 and the Velcro fastening arrangement 206,207. The fastening arrangement 206,207 preferably has a metallised polyester reflective panel 209 on top of it to reflect the radiant heat away. The Velcro 206,207 allows the top panel 209 to lift and the sensor 200 to be removed easily. The hook fastener would be a limited use fastener.
2) In a third embodiment referring to Figure 3 similar to the above, with the Velcro being replaced by an all in one Hydrogel 300 and foam 302 arrangement. The sensor sits on top of the Hydrogel 300 surrounded by foam 302 and is held in by the bottom Hydrogel's tackiness along with another layer of Hydrogel 306 folded on top of it covered with a reflective metallised polyester layer 304. The sensor can be removed by pulling back the top layer 306 of Hydrogel.

Each portion of Hydrogel and/or the other components would be die cut and then manually assembled. The assemblies are placed on a release liner and packaged in foil barrier pouches.

### Hydrogel

The Hydrogel is required to be adhesive to the skin of mammals, particularly that of infants, without causing damage on removal. Examples are given in US 5,868,136, US 6,038,464 and US 6,115,625.

Preferably the Hydrogels is chosen from the range currently offered by Amgel Corporation. The Amgel Hydrogels are characterised by an internal screen which allows two different adhesion properties in one gel. Thus the Hydrogel can be formulated to have optimum skin adhesion to the patient on one surface and strong adhesion to substrates to fabricate the cover itself. AG 603 type Hydrogel is at the high end of the skin adhesion range of neonates. AG 603 appears to have the best properties of the Hydrogel tested.

### The sensor

A stainless steel disc, PVC tip, Mylar tip and the over moulded with plastic are all possible constructions of the sensor.

The PVC tip cap did not perform well. It is difficult to get good contact with the block and generally there is always an air gap, which acts as an insulator causing the temperature sensor to under read by up to 1°C. The application of a thermally conductive potting compound allowed the tip cap sensor to read accurately confirming the air gap theory. The stainless steel disc samples read accurately throughout the tests.

For a flat disc type sensor sensing through the Hydrogel shows comparable accuracy and response to the conventional method. This method is likely to have the advantages of maximum adhesion from full contact area and reducing the propensity to have air gaps.

### The thermal shield

The Mylar foil and the foam both have the effect of cutting down the radiated heat from the warmer contributing to the skin temperature measurement. Prior art products which do not have foam have an artificially high skin temperature reading and undergo transients when the applied heat is suddenly removed i.e. putting an absorber over the block. The sensor through the Hydrogel is the least sensitive and reflects the block temperature more accurately than with the prior art. The Mylar foil preferably covers the whole area of the Hydrogel, as this is the most efficient at resisting the effects of radiant heat. Preferably the foam is the same thickness as the sensor (in this case 2.4mm) and the foil is 0.025mm thick.

To have as accurate temperature measurement as possible a full foam and Mylar covering is preferred. Prior art probe covers give artificially high temperature readout because they do not have a layer of foam insulation.

The removal of air from the system is preferable. Variations in temperature measurement have generally been associated with entrapment of air either around the sensor itself or between layers in the probe covers construction.

The first embodiment may be particularly suited for Labour and Delivery applications in that the use of the sensor would be in the order of hours with maximum feedback required in the first 15-20 minutes. This is the time taken to stabilize the baby and prepare it for transport to the Neonatal Intensive Care Unit (NICU) where the infants are cared for on a long term basis.

For the NICU itself this design would work well if the Hydrogel had longevity of up to 72 hours, but due to the possible length of stay of a neonate in the NICU it may probably more advantageous to use the second or third embodiment with a separate probe cover and temperature sensor. The Hydrogel is only effective for a certain period and therefore ideally should be replaced without the need to replace or reconnect the sensor.

## Claims

1. A sensor enclosure for use as part of a system for determining the temperature of a patient's skin, comprising:
a main adhesive polymer matrix (102; 202; 300) configured to adhere to a portion of said patient's skin,
a receptacle (102, 103; 202, 203; 300, 302) for a temperature sensor, configured so that when said sensor is located in said receptacle (102, 103; 202, 203; 300, 302) it at least in part thermally contacts said main adhesive polymer matrix (102; 202; 300), and
a thermally reflective or shielding panel (108; 209; 304) on the opposite side of said receptacle (102, 103; 202, 203; 300, 302) to that which would in use be proximate the skin of said patient,
***characterised in that***
said main adhesive polymer matrix (102; 202; 300) and said receptacle (102, 103; 202, 203; 300, 302) are configured so that in use a sensor (100) held within said receptacle (102, 103; 202, 203; 300, 302) measures the temperature of said patient's skin through said main adhesive polymer matrix (102; 202; 300).

2. A sensor enclosure according to claim 1, wherein said receptacle is enclosed by said panel, enclosed by said main adhesive polymer matrix or enclosed by a combination of said panel and said polymer matrix.

3. A sensor enclosure as claimed in any preceding claim, wherein said system further includes a temperature sensor (100) within, in use said receptacle (102, 103, 202, 203, 300, 302).

4. A sensor enclosure according to any preceding claim wherein said main adhesive polymer matrix (102, 202, 300) and said sensor (100) are configured to adhere to one another, in use.

5. A sensor enclosure according to any preceding claim wherein said shielding panel (108, 209, 304) further comprises top thermal insulation (104) located between said shielding panel (108,209,304) and said sensor (100), in use.

6. A sensor enclosure according to any preceding claim wherein said sensor is fully encapsulated by said main adhesive polymer matrix.

7. A sensor enclosure according to any preceding claim further including a detachable polymer matrix lid (306) for said receptacle (300, 302), to encapsulate, in use, said sensor.

8. A sensor enclosure according to claim 7, wherein said lid (306) is comprised of said polymer matrix which, in use, adheres to said main adhesive polymer matrix portion (300) thereby encapsulating said sensor.

9. A sensor enclosure according to any one of claims 1 to 5, wherein said sensor enclosure further includes a Velcro™ loop fastening arrangement (206, 207) with said shielding panel (209), wherein the main adhesive polymer matrix is a hydrogel (202) and the shielding panel (209) is a metallised polyester reflective panel.

10. A sensor enclosure according to any preceding claim wherein said sensor (100) is a flat disc type sensor.

11. A sensor enclosure according to any preceding claim, wherein said shielding panel (108, 209, 304) is Mylar foil.

12. A sensor enclosure according to claim 11, wherein said Mylar foil is 0.025mm thick.

13. A sensor enclosure according to claim 5, wherein said insulation (104) is foam.

14. A sensor enclosure according to claim 13 wherein said foam (104) is similar or the same in thickness to said sensor (100).

15. A sensor enclosure as claimed in claim 14 wherein said main adhesive polymer matrix is formed from a polymerizerable polymer Hydrogel.

16. A sensor enclosure according to any preceding claim, wherein, in use, the sensor (100) sits on top of said main adhesive polymer matrix (102, 202, 300) and is surrounded by thermal insulation (103, 203, 302), the polymer matrix being a hydrogel (300) and the thermal insulation being foam (302).

## Revendications

1. Enveloppe de capteur à utiliser comme partie d'un système pour déterminer la température de la peau d'un patient, comprenant:
une matrice polymère adhésive principale (102; 202; 300) qui est configurée de manière à adhérer à une partie de la peau dudit patient,
un réceptacle (102, 103; 202, 203; 300, 302) pour un capteur de température, qui est configuré de telle sorte que lorsque ledit capteur se trouve dans ledit réceptacle (102, 103; 202, 203; 300, 302), il soit au moins partiellement en contact thermique avec ladite matrice polymère adhésive principale (102; 202; 300), et
un panneau de blindage ou thermiquement réfléchissant (108; 209; 304) qui est situé sur le côté dudit réceptacle (102, 103; 202, 203; 300, 302) qui est opposé au côté qui, lors de l'utilisation, sera situé à proximité de la peau dudit patient,
**caractérisé en ce que** ladite matrice polymère adhésive principale (102; 202; 300) et ledit réceptacle (102, 103; 202, 203; 300, 302) sont configurés de telle sorte que, lors de l'utilisation, un capteur (100) qui est maintenu à l'intérieur dudit réceptacle (102, 103; 202, 203; 300, 302) mesure la température de la peau dudit patient à travers ladite matrice polymère adhésive principale (102; 202; 300).

2. Enveloppe de capteur selon la revendication 1, dans laquelle ledit réceptacle est entouré par ledit panneau, entouré par ladite matrice polymère adhésive principale ou entouré par une combinaison dudit panneau et de ladite matrice polymère adhésive principale.

3. Enveloppe de capteur selon l'une quelconque des revendications précédentes, dans laquelle ledit système comprend en outre un capteur de température (100) à l'intérieur, lors de l'utilisation, dudit réceptacle (102, 103, 202, 203, 300, 302).

4. Enveloppe de capteur selon l'une quelconque des revendications précédentes, dans laquelle ladite matrice polymère adhésive principale (102, 202, 300) et ledit capteur (100) sont configurés de manière à adhérer l'un à l'autre lors de l'utilisation.

5. Enveloppe de capteur selon l'une quelconque des revendications précédentes, dans laquelle ledit panneau de blindage (108, 209, 304) comprend en outre un isolant thermique supérieur (104) qui est situé entre ledit panneau de blindage (108, 209, 304) et ledit capteur (100) lors de l'utilisation.

6. Enveloppe de capteur selon l'une quelconque des revendications précédentes, dans laquelle ledit capteur est entièrement enveloppé par ladite matrice polymère adhésive principale.

7. Enveloppe de capteur selon l'une quelconque des revendications précédentes, comprenant en outre un couvercle de matrice polymère détachable (306) pour ledit réceptacle (300, 302) destiné à enfermer ledit capteur lors de l'utilisation.

8. Enveloppe de capteur selon la revendication 7, dans laquelle ledit couvercle (306) est constitué de ladite matrice polymère qui, lors de l'utilisation, adhère à ladite partie de matrice polymère adhésive principale (300), enveloppant ainsi ledit capteur.

9. Enveloppe de capteur selon l'une quelconque des revendications 1 à 5, dans laquelle ladite enveloppe de capteur comprend en outre un agencement de fixation du type boucle Velcro^{™} (206, 207) avec ledit panneau de blindage (209), dans laquelle la matrice polymère adhésive principale est un hydrogel (202), et le panneau de blindage (209) est un panneau réfléchissant de polyester métallisé.

10. Enveloppe de capteur selon l'une quelconque des revendications précédentes, dans laquelle ledit capteur (100) est un capteur du type à disque plat.

11. Enveloppe de capteur selon l'une quelconque des revendications précédentes, dans laquelle ledit panneau de blindage (108, 209, 304) est une feuille de mylar.

12. Enveloppe de capteur selon la revendication 11, dans laquelle ladite feuille de mylar présente une épaisseur de 0,025 mm.

13. Enveloppe de capteur selon la revendication 5, dans laquelle ledit isolant (104) est une mousse.

14. Enveloppe de capteur selon la revendication 13, dans laquelle l'épaisseur de ladite mousse (104) est similaire ou identique à celle dudit capteur (100).

15. Enveloppe de capteur selon la revendication 14, dans laquelle ladite matrice polymère adhésive principale est formée à partir d'un hydrogel polymère polymérisable.

16. Enveloppe de capteur selon l'une quelconque des revendications précédentes, dans laquelle, lors de l'utilisation, le capteur (100) est posé sur le sommet de la matrice polymère adhésive principale (102, 202, 300), et est entouré par un isolant thermique (103, 203, 302), la matrice polymère étant un hydrogel (300), et l'isolant thermique étant une mousse (302).

## Patentansprüche

1. Sensorgehäuse zur Verwendung als Teil eines Systems zum Bestimmen der Temperatur von Haut eines Patienten, umfassend:
eine Haupt-Haftpolymermatrix (102; 202; 300), die zum Haften an einem Teil der Haut des Patienten gestaltet ist,
einen Aufnahmebehälter (102, 103; 202, 203; 300, 302) für einen Temperatursensor, der so gestaltet ist, dass, wenn der Sensor in dem Aufnahmebehälter (102, 103; 202, 203; 300, 302) angeordnet ist, er die Haupt-Haftpolymermatrix (102; 202; 300) wenigstens zum Teil thermisch kontaktiert, und
eine wärmereflektierende oder -abschirmende Blende (108; 209; 304) an der gegenüberliegenden Seite des Aufnahmebehälters (102, 103; 202, 203; 300, 302) bezüglich jener, die bei der Verwendung der Haut des Patienten benachbart ist,
***dadurch gekennzeichnet,***
**dass** die Haupt-Haftpolymermatrix (102; 202; 300) und der Aufnahmebehälter (102, 103; 202, 203; 300, 302) so gestaltet sind, dass bei der Verwendung ein in dem Aufnahmebehälter (102, 103; 202, 203; 300, 302) angeordneter Sensor (100) die Temperatur der Haut des Patienten durch die Haupt-Haftpolymermatrix (102; 202; 300) misst.

2. Sensorgehäuse gemäß Anspruch 1, wobei der Aufnahmebehälter von der Blende umschlossen ist, von der Haupt-Haftpolymermatrix umschlossen ist oder von einer Kombination der Blende und der Haupt-Haftpolymermatrix umschlossen ist.

3. Sensorgehäuse gemäß einem der vorstehenden Ansprüche, wobei das System bei der Verwendung ferner einen Temperatursensor (100) in dem Aufnahmebehälter (102, 103, 202, 203, 300, 302) umfasst.

4. Sensorgehäuse gemäß einem der vorstehenden Ansprüche, wobei die Haupt-Haftpolymermatrix (102, 202, 300) und der Sensor (100) dafür gestaltet sind, bei der Verwendung aneinander zu haften.

5. Sensorgehäuse gemäß einem der vorstehenden Ansprüche, wobei die Abschirmblende (108, 209, 304) ferner eine obere Wärmeisolation (104) umfasst, die bei der Verwendung zwischen der Abschirmblende (108, 209, 304) und dem Sensor (100) angeordnet ist.

6. Sensorgehäuse gemäß einem der vorstehenden Ansprüche, wobei der Sensor von der Haupt-Haftpolymermatrix vollständig verkapselt ist.

7. Sensorgehäuse gemäß einem der vorstehenden Ansprüche, ferner umfassend einen ablösbaren Polymermatrix-Deckel (306) für den Aufnahmebehälter (300, 302), um den Sensor bei der Verwendung zu verkapseln.

8. Sensorgehäuse gemäß Anspruch 7, wobei der Deckel (306) aus der Polymermatrix besteht, die bei der Verwendung an den Haupt-Haftpolymermatrix-Abschnitt (300) haftet und **dadurch** den Sensor verkapselt.

9. Sensorgehäuse gemäß einem der Ansprüche 1 bis 5, wobei das Sensorgehäuse ferner eine Velcro^{™}-Loop Befestigungsanordnung (206, 207) an der Abschirmblende (209) umfasst, wobei die Haupt-Haftpolymermatrix ein Hydrogel (202) ist und die Abschirmblende (209) eine reflektierende Blende aus metallisiertem Polyester ist.

10. Sensorgehäuse gemäß einem der vorstehenden Ansprüche, wobei der Sensor (100) ein Sensor vom Typ einer flachen Scheibe ist.

11. Sensorgehäuse gemäß einem der vorstehenden Ansprüche, wobei die Abschirmblende (108, 209, 304) eine Mylar-Folie ist.

12. Sensorgehäuse gemäß Anspruch 11, wobei die Mylar-Folie 0,025 mm dick ist.

13. Sensorgehäuse gemäß Anspruch 5, wobei die Isolation (104) Schaumstoff ist.

14. Sensorgehäuse gemäß Anspruch 13, wobei der Schaumstoff (104) eine ähnliche oder die gleiche Dicke wie der Sensor (100) aufweist.

15. Sensorgehäuse gemäß Anspruch 14, wobei die Haupt-Haftpolymermatrix aus einem polymerisierbaren Polymer-Hydrogel gebildet ist.

16. Sensorgehäuse gemäß einem der vorstehenden Ansprüche, wobei bei der Verwendung der Sensor (100) an der Oberseite der Haupt-Haftpolymermatrix (102, 202, 300) angeordnet ist und von Wärmeisolation (103, 203, 302) umgeben ist, wobei die Polymermatrix ein Hydrogel (300) ist und die Wärmeisolation Schaumstoff (302) ist.
